# EUROPÄISCHE PATENTANMELDUNG

(11) **EP 1 055 758 A1**
(43) Veröffentlichungstag der Anmeldung: **29.11.2000**
(21) Anmeldenummer: 00110859.6
(22) Anmeldetag: 23.05.2000
(51) Int. Cl.: D04B 27/00, F16P 1/00, G10K 11/16

(54) **Kettenwirkmaschine**

(30) Priorität: 28.05.1999 DE 29909339 U
(71) Anmelder: KARL MAYER TEXTILMASCHINENFABRIK GmbH, 63179 Obertshausen (DE)
(72) Erfinder: Kemper, Rainer, 63150 Heusenstamm (DE); Möser, Michael, 63584 Gründau-Rothenberge (DE)
(74) Vertreter: Knoblauch, Ulrich, Dr.

(57) **Zusammenfassung**

Eine Kettenwirkmaschine (1) weist ein Maschinenbett und einen die Wirkwerkzeuge und gegebenenfalls den Warenabzug aufweisenden Arbeitsbereich (2), der von einer Bedienseite her zugänglich ist, auf. Es gibt wenigstens eine durchsichtige Schallschutzscheibe (10), die aus einer ersten Stellung, in der sie längs des Arbeitsbereichs (2) auf dessen Bedienseite (11) angeordnet ist, in eine zweite Stellung, in der sie den Zugang zum Arbeitsbereich (2) ermöglicht, verlagerbar ist.

Auf diese Weise wird der Geräuschpegel, insbesondere im Bereich des Hauptaufenthaltsortes der Wirker, reduziert.

## Beschreibung

Die Erfindung bezieht sich auf eine Kettenwirkmaschine mit einem Maschinenbett und einem die Wirkwerkzeuge und gegebenenfalls den Warenabzug aufweisenden Arbeitsbereich, der von einer Bedienseite her zugänglich ist.

Bei Kettenwirkmaschine der hier betrachteten Art, seien es Kettenwirkautomaten oder Raschelmaschinen, treten Geräusche auf, deren Pegel mit steigender Drehzahl zunimmt. Für die Entstehung der Geräusche kommen verschiedene Ursachen in Betracht, unter anderem der Abschlag der Maschen und das mechanische Lagerspiel der miteinander wirkenden Maschinenbauelemente. Die Schallwellen bewegen sich nach allen Seiten von der Maschine weg, verteilen sich im Raum und verursachen einen sehr hohen Lärmpegel.

Kettenwirkmaschine sind in der Regel mit den Arbeitsbreiten in Reihe nebeneinander ausgerichtet. Der Wirker, der in regelmäßigen Zeitabständen Kontrollgänge längs der Bedienseite der Maschinen durchführt, ist diesem Lärm ständig ausgesetzt.

Der Erfindung liegt die Aufgabe zugrunde, den Geräuschpegel insgesamt, vor allem im Bereich des Hauptaufenthaltsortes der Wirker, zu reduzieren.

Diese Aufgabe wird erfindungsgemäß gelöst durch wenigstens eine durchsichtige Schallschutzscheibe, die aus einer ersten Stellung, in der sie längs des Arbeitsbereichs auf dessen Bedienseite angeordnet ist, in eine zweite Stellung, in der sie den Zugang zum Arbeitsbereich ermöglicht, verlagerbar ist.

Die sich über die gesamte Breite des Arbeitsbereichs erstreckende durchsichtige Schallschutzscheibe ist so angeordnet, daß der Wirker zwar freie Sicht auf die Wirkwerkzeuge und den Warenabzug hat, jedoch von Schallwellen, die in seine Richtung gehen, erheblich abgeschirmt wird. Allerdings ist es von Zeit zu Zeit notwendig, an die Wirkwerkzeuge oder an den Warenabzug zu gelangen. Aus diesem Grund kann die durchsichtige Schallschutzscheibe in eine zweite Stellung verlagert werden, in der sie den Arbeitsbereich frei gibt.

Besonders vorteilhaft ist es, daß die Oberkante der durchsichtigen Schallschutzscheibe in der ersten Stellung mindestens 1,80 m über dem Boden eines Bediengangs verläuft. Auf diese Weise schirmt die Schallschutzscheibe den Kopf und insbesondere die Ohren des einen Kontrollgang durchführenden Wirkers vor direkten Schallwellen ab, so daß sich der Lärmpegel in diesem Bereich besonders stark reduziert.

Günstig ist es auch, daß die durchsichtige Schallschutzscheibe aus einer oberen ersten Stellung in eine untere zweite Stellung absenkbar ist. Die durchsichtige Schallschutzscheibe wird daher durch eine Vertikalverschiebung aus der ersten in die zweite Stellung und wieder zurück gebracht.

Eine ebenfalls bevorzugte Alternative besteht darin, daß die durchsichtige Schallschutzscheibe durch Schwenken um eine horizontale Achse aus der ersten Stellung in die zweite Stellung verlagerbar ist. Beispielsweise kann die Schallschutzscheibe aus einer Vertikalebene in eine Horizontalebene oberhalb der Bedienungsperson geschwenkt werden.

Vorteilhaft ist es, daß mindestens eine weitere Schallschutzeinrichtung unterhalb des Arbeitsbereichs nahe dem Maschinenbett angeordnet ist. Es kann sich beispielsweise um eine nicht-durchsichtige Platte handeln, die mit einer Schallschluckschicht belegt ist. Auf diese Weise wird praktisch die gesamte Bedienseite gegen einen direkten Schallaustritt nach außen abgeschirmt.

Empfehlenswert ist es auch, daß auf der der Bedienseite abgewandten Seite des Arbeitsbereichs mindestens eine zusätzliche Schallschutzeinrichtung angeordnet ist. Hierdurch wird der Arbeitsbereich nicht nur zur Bedienseite hin, sondern auch zur entgegengesetzten Seite hin gegen einen Schallwellenaustritt abgeschirmt.

Die Erfindung wird im folgenden anhand von bevorzugten Ausführungsbeispielen in Verbindung mit der Zeichnung näher beschrieben. Hierin zeigen:
- Fig. 1: perspektivisch eine erste Ausführungsform einer erfindungsgemäßen Kettenwirkmaschine und
- Fig. 2: im Längsschnitt eine zweite Ausführungsform.

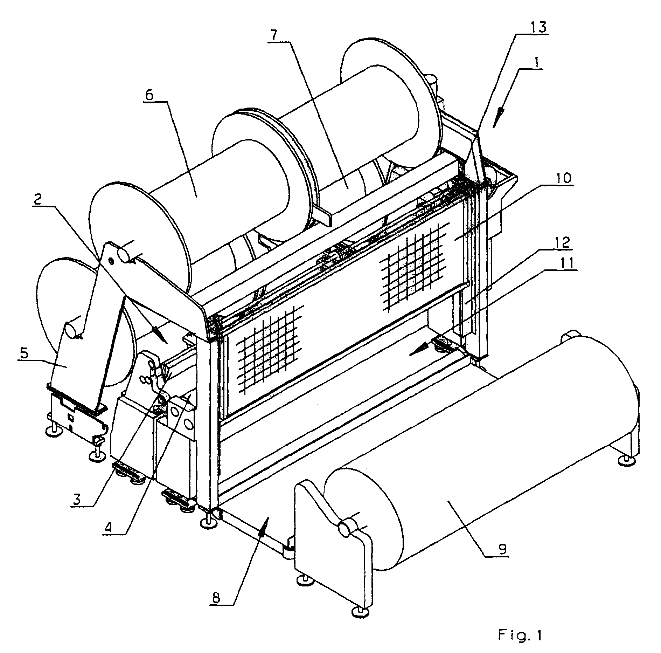

Fig. 1 veranschaulicht eine Kettenwirknaschine 1, die in bekannter Weise einen Arbeitsbereich 2 aufweist, in dem sich Wirkwerkzeuge 3, wie Hakennadeln, Schiebernadeln, Lochnadeln, Stechkammplatinen, Abschlagplatinen, usw., und ein Warenabzug 4 befinden. Ein Gestell 5 trägt zwei Kettbäume 6 und 7, von denen den Wirkwerkzeugen 3 Fäden zugeführt werden. Die abgezogene Ware wird unter einem Bediengang 8 durchgezogen und auf einen Wickel 9 aufgewickelt.

Eine durchsichtige Schallschutzscheibe 10 erstreckt sich über die gesamte Breite des Arbeitsbereiche 2 auf dessen Bedienseite 11, die durch den Bediengang 8 definiert ist. In der veranschaulichten ersten Stellung dieser Schallechutzecheibe 10 ist das korrekte Arbeiten der Wirkwerkzeuge 3 und des Warenabzugs 4 gut zu beobachten. Außerdem ist der kontrollierende Wirker gegen eine Direktetrahlung des Schalls aus dem Arbeitsbereich 2 abgeschirmt. Um Maßnahmen im Arbeitsbereich 2 vornehmen zu können, ist die durchsichtige Schallechutzecheibe 10 längs einer Vertikalführung 12 in eine zweite Stellung absenkbar, in der der Wirker über die oberkante 13 der Schallschutzscheibe 10 hinweggreifen kann.

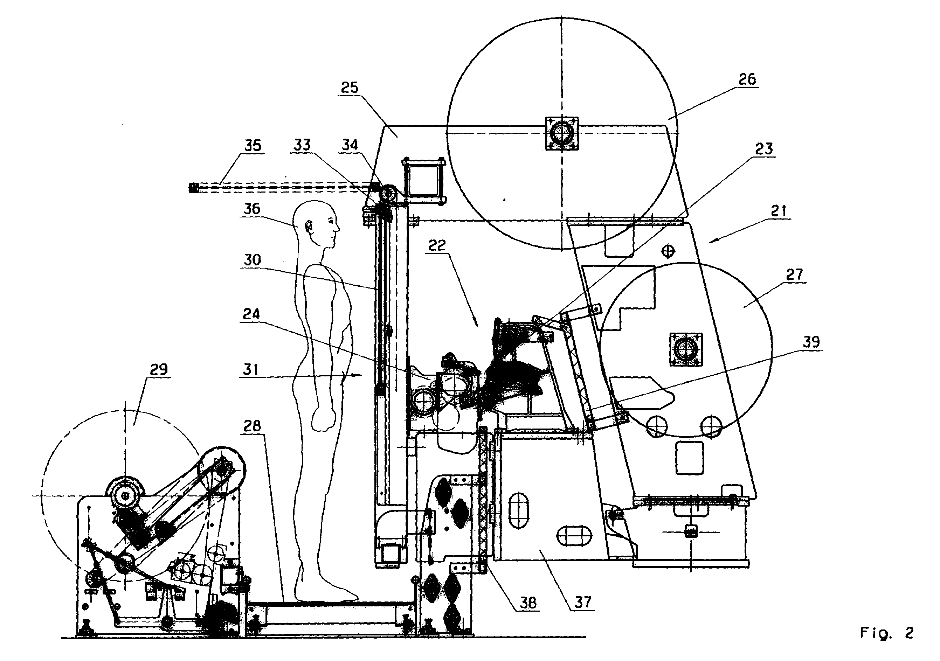

Bei der Ausführungsform nach der Fig. 2 werden für entsprechende Teile um 20 gegenüber Fig. 1 erhöhte Bezugszeichen verwendet. Ein wesentlicher Unterschied besteht darin, daß die durchsichtige Schallschutzscheibe 30 um eine horizontale Achse 34 in die gestrichelt veranschaulichte zweite Stellung 35 schwenkbar ist, um den Zugang zum Arbeitsbereich 22 für den Wirker 36 frei zu machen. Die Oberkante 33 der Schallschutzscheibe 30 liegt um mindestens 1,8 m über dem Boden des Bedienganges 28, so daß der Kopf des Wirkers 36 gegen direkte Schallstrahlung aus dem Arbeitsbereich 22 geschützt ist.

Die Wirkwerkzeuge 23 werden in üblicher Weise aus einen Maschinenbett 37 angetrieben. Unterhalb des Arbeitsbereichs 22 befindet sich auf der Bedienseite 31 dicht neben dem Maschinenbett 37 eine zusätzliche Schallschutzeinrichtung 38. Diese besteht aus einer fest montierten Platte, die undurchsichtig sein kann und eine Schallschutzschicht trägt. Sie verhindert, daß Schallwellen, die vom Maschinenbett 37 ausgehen, ungehindert in Richtung des Bedienganges 28 austreten können.

Eine weitere Schallschutzeinrichtung 39 wiederum in der Forme einer Platte befindet sich auf der der Bedienseite 31 gegenüberliegenden Seite der Kettenwirkmaschine 21. Sie ist ebenfalls fest montiert und braucht nicht durchsichtig zu sein. Im Arbeitsbereich entstehende Schallwellen können daher weder zur Bedienseite hin in nennenswertem Maße austreten.

Als Material für die durchsichtige Schallschutzscheibe kommen alle Materialien in Betracht, die durchsichtig sind und schallreflektierende oder auch schalldämpfende Eigenschaften besitzen. Insbesondere kommt hierfür Glas oder ein Kunststoff, wie Polyacryl, in Betracht. Das Material für die Schallschutzeinrichtungen 38 und 39, das nicht durchsichtig zu sein braucht, ist zweckmäßigerweise nicht nur schallreflektierend, sondern auch schallabsorbierend. Hierfür stehen zahlreiche Materialien, angefangen von normalem Stahlblech bis hin zu Dämmplatten, zur Verfügung.

## Patentansprüche

1. Kettenwirkmaschine mit einem Maschinenbett und einem die Wirkwerkzeuge und gegebenenfalls den Warenabzug aufweisenden Arbeitsbereich, der von einer Bedienseite her zugänglich ist, gekennzeichnet durch wenigstens eine durchsichtige Schallschutzscheibe (10; 30), die aus einer ersten Stellung, in der sie längs des Arbeitsbereichs (2; 22) auf dessen Bedienseite (11; 31) angeordnet ist, in eine zweite Stellung, in der sie den Zugang zum Arbeitsbereich (2; 22) ermöglicht, verlagerbar ist.

2. Kettenwirkmaschine nach Anspruch 1, dadurch gekennzeichnet, daß die Oberkante (3; 33) der durchsichtigen Schallschutzscheibe (10; 30) in der ersten Stellung mindestens 1,80 m über den Boden eines Bediengangs (8; 28) verläuft.

3. Kettenwirkmaschine nach Anspruch 1 oder 2, dadurch gekennzeichnet, daß die durchsichtige Schallschutzscheibe (10) aus einer oberen ersten Stellung in eine untere zweite Stellung absenkbar ist.

4. Kettenwirkmaschine nach Anspruch 1 oder 2, dadurch gekennzeichnet, daß die durchsichtige Schallschutzscheibe (30) durch Schwenken um eine horizontale Achse (34) aus der ersten Stellung in die zweite Stellung verlagerbar ist.

5. Kettenwirknaschine nach einem der Ansprüche 1 bis 4, dadurch gekennzeichnet, daß mindestens eine weitere Schallschutzeinrichtung (38) unterhalb des Arbeitsbereichs (22) nahe dem Maschinenbett (37) angeordnet ist.

6. Kettenwirknaschine nach einem der Ansprüche 1 bis 5, dadurch gekennzeichnet, daß auf der der Bedienseite (31) abgewandten Seite des Arbeitsbereichs (22) mindestens eine zusätzliche Schallschutzeinrichtung (39) angeordnet ist.
